# FASCICULE DE BREVET EUROPEEN

(11) **EP 1 447 604 B1**
(45) Date de publication et mention de la délivrance du brevet: **20.04.2011**
(21) Numéro de dépôt: 04290380.7
(22) Date de dépôt: 12.02.2004
(51) Int. Cl.: F16L 1/036

(54) **Procédé de pose d'éléments tubulaires enterrés et préparation de mortier pour sa mise en oeuvre**
Verfahren zum Erdlegen von rohrförmigen Elementen und Mörtelvorbereitung zum Durchführen des Verfahrens
Method for the burying of tubular elements and mortar composition for carrying out this method

(30) Priorité: 13.02.2003 FR 0301764
(43) Date de publication de la demande: 18.08.2004
(73) Titulaire: GDF SUEZ, 92400 Courbevoie (FR); ETDE, 78180 Montigny le Bretonneux (FR)
(72) Inventeur: Laffite, Héléne, 94220 Charenton Le Pont (FR); Hardy, Michel, 92700 Colombes (FR); Mangin, Claude, 75020 Paris (FR); Seiler, Patrick, 78100 Saint-Germain en Laye (FR); Navarre, Pierre, 78690 Les Essarts Le Roi (FR)
(74) Mandataire: Bérogin, Francis

(56) Documents cités:
- FR-A- 2 758 378
- GB-A- 1 392 931
- US-A- 6 158 925

## Description

La présente invention est relative aux procédés de pose d'éléments tubulaires enterrés, ainsi qu'aux préparations de mortier, notamment aux préparations de mortier pour la mise en oeuvre de ces procédés.

Plus particulièrement, l'invention concerne un procédé de pose d'éléments tubulaires enterrés, tels que des conduites pour transporter un fluide et notamment du gaz.

On connaît déjà, par le document GB 2 213 228, un procédé comportant les opérations consistant à :
- creuser une tranchée allongée ayant une largeur et une profondeur supérieures aux dimensions transversales correspondantes d'un élément tubulaire, cette tranchée ayant un fond constitué du matériau en place sur le terrain avant la réalisation de la tranchée,
- déposer au moins une partie de l'élément tubulaire dans la tranchée, et
- faire couler une préparation de mortier dans la tranchée.

Dans ce procédé de l'art antérieur, l'élément tubulaire enterré est une conduite en polyéthylène haute densité pour la distribution de gaz et la tranchée est creusée sur une largeur inférieure ou sensiblement égale à 20 cm (8 pouces), mais sur une profondeur supérieure à 60 cm (2 pieds).

Etant donné que dans les procédés de ce type il n'est pas aisé d'utiliser des machines pour compacter un remblai (notamment à cause de la faible largeur de la tranchée), un matériau de remplissage liquide ne nécessitant pas de compactage est utilisé. Il s'agit par exemple de béton autocompactant tel que du béton mousse.

Il peut arriver, avec des procédés de ce type, si l'élément tubulaire est déposé directement au fond de la tranchée, sans sablon, qu'il soit en contact avec des éléments agressifs qui jonchent le fond de la tranchée. Ceci peut avoir des conséquences néfastes pour l'intégrité de la paroi constitutive de l'élément tubulaire. De telles conséquences doivent être évitées, notamment lorsque l'élément tubulaire est une conduite de gaz.

Le document FR-A-2 758 378 divulgue le préambule des revendications 1 et 5.

L'invention est un procédé selon la revendication 1.

Grâce à ces dispositions, l'élément tubulaire est mis en suspension dans la préparation de mortier. Grâce à sa fine granulométrie, cette préparation de mortier n'endommage pas l'élément tubulaire. En outre, la préparation de mortier entoure et protège ainsi, sur toute sa circonférence, l'élément tubulaire du matériau constitutif des parois de la tranchée. La granulométrie choisie permet aussi d'obtenir une ré-excavabilité et une rhéologie adaptées aux applications souhaitées pour l'invention.

Dans des modes de mise en oeuvre du procédé selon l'invention, on peut éventuellement avoir recours en outre à l'une et/ou à l'autre des dispositions suivantes :
- l'élément tubulaire est pourvu, avant de le déposer dans la tranchée, d'une couche de protection ; cette couche de protection est par exemple constituée de protection anti-roche, de mousse de polyéthylène, de polypropylène, etc. ; cette couche de protection permet d'éviter les problèmes liés à la différence des coefficients de dilatation linéique pour la préparation de mortier et le polyéthylène ; cette couche de protection permet d'éviter les rayures de l'élément tubulaire lors des opérations de pose de celui-ci ; cette couche de protection fournit aussi un amortissement des poinçonnements et évite les points d'accroche sur l'élément tubulaire ;
- un élément métallique est adjoint à l'élément tubulaire avant l'opération consistant à faire couler la préparation de mortier dans la tranchée, afin de permettre un repérage aisé de l'élément tubulaire, à partir de la surface du terrain dans laquelle il est enterré ; cette disposition est particulièrement intéressante lorsque la tranchée est peu profonde car la détection de l'élément métallique peut être effectuée avec un détecteur de métaux relativement ordinaire ; et
- la tranchée est creusée sur une profondeur inférieure ou sensiblement égale à 60 cm.

Selon un autre aspect, l'invention concerne une préparation de mortier, notamment pour la mise en oeuvre du procédé mentionné ci-dessus, selon la revendication 5.

Dans des modes de réalisation de la préparation de mortier selon l'invention, celle-ci comporte éventuellement en outre l'une et/ou l'autre des dispositions suivantes :
- une perméabilité adaptée pour que l'eau s'écoule ; on évite ainsi les ruptures de la préparation de mortier qui interviendraient autrement si, en cas de gel, cette préparation était imbibée d'eau ;
- elle est colorée pour avoir une couleur codifiée, permettant lors d'une ré-excavation de l'élément tubulaire enterré, de connaître la nature du fluide transporté par l'élément tubulaire; cette couleur est jaune par exemple pour un élément tubulaire destiné à la distribution de gaz ; cette couleur est obtenue par exemple par adjonction d'un colorant approprié à du ciment gris ;
- elle est chimiquement inerte pour le polyéthylène haute densité;
- elle a un module de portance à la plaque sensiblement égal ou supérieur à 50MPa ;
- une fois solidifiée, elle a une résistance en compression à quatre-vingt-dix jours, supérieure ou égale à 2 Mpa ;
- une fois solidifiée, elle a une résistance en compression à vingt-huit jours, inférieure à 0,7 Mpa ; et
- elle comprend au moins l'un des matériaux compris dans la liste comportant la chaux, l'argile et un grave ; ainsi il peut s'agir d'une boue chargée en chaux.

D'autres aspects, buts et avantages de l'invention apparaîtront à la lecture de la description d'un de ses modes de réalisation. L'invention sera également mieux comprise à l'aide des dessins, sur lesquels :
- la figure 1 représente schématiquement en coupe une tranchée dans laquelle un élément tubulaire est directement déposé sur le fond, et
- la figure 2 représente schématiquement, de manière analogue à la figure précédente, la tranchée de la figure 1 avec l'élément tubulaire recouvert de la préparation de mortier selon l'invention.

Sur les différentes figures, les mêmes références désignent des éléments identiques ou similaires.

Un exemple de mode de mise en oeuvre du procédé selon l'invention est décrit ci-dessous à titre d'illustration et de manière non limitative.

Selon cet exemple, le procédé selon l'invention est destiné à la pose de conduites enterrées adaptée à la distribution de gaz à faible profondeur en milieu urbain.

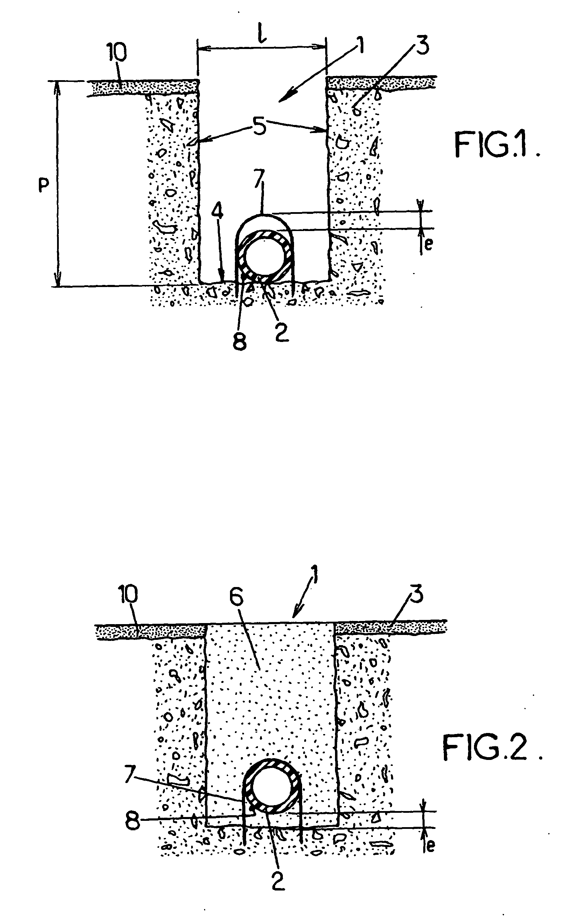

Comme illustré sur la figure 1, ce procédé comporte les opérations consistant à :
- creuser une tranchée 1 allongée (perpendiculairement au plan de coupe) ayant une largeur 1 et une profondeur P, et à
- déposer un élément tubulaire 2 dans la tranchée 1.

La tranchée 1 est creusée dans un terrain 3 correspondant à une chaussée, un trottoir ou un accotement. Le terrain 3 comporte éventuellement une couche de roulement 10. La tranchée 1 comporte un fond 4 et des parois 5. Ceux-ci sont constitués du matériau en place sur le terrain 3.

Selon cet exemple, l'élément tubulaire 2 est une conduite de gaz en polyéthylène haute densité. Cet élément tubulaire 2 a par exemple une section circulaire avec un diamètre D de 63 mm. L'élément tubulaire 2 a par exemple une paroi dont l'épaisseur nominale et de 5,7 mm.

Selon une variante, l'élément tubulaire 2 est muni d'une couche de protection (non représentée). Cette couche de protection est par exemple constituée d'une couche de polymère de 3 mm d'épaisseur ou d'une couche de géotextile de 10 mm d'épaisseur.

Bien entendu, selon des variantes, l'élément tubulaire 2 peut avoir une section sensiblement triangulaire, carrée, ovale, etc. Dans tous les cas, la tranchée 1 a une largeur 1 et une profondeur P supérieures aux dimensions transversales correspondantes de l'élément tubulaire 2. Ainsi, si l'élément tubulaire 2 a une section sensiblement triangulaire (par exemple si trois conduites sont rassemblées dans une enveloppe commune) et que l'élément tubulaire 2 repose, au fond de la tranchée 1, sur l'un des côtés du triangle, la largeur de la tranchée 1 sera supérieure à la longueur de ce côté.

Néanmoins, la tranchée 1 a de faibles dimensions. Par exemple, sa profondeur P est comprise entre 40 et 60 cm, tandis que sa largeur est comprise entre 10 et 20 cm. Le procédé selon l'invention permet de réduire ainsi fortement le volume des terres extraites du terrain 3 pour la réalisation de la tranchée 1. Ce gain peut-être de 7 à 8, par rapport au volume extrait pour la réalisation d'une tranchée classique. Ceci permet de limiter les nuisances pour l'environnement tout en augmentant la vitesse de pose des éléments tubulaires 2. Lorsque la tranchée 1 est creusée dans la chaussée, celle-ci peut-être réutilisée dans un temps très court.

En outre, le fait de réaliser une tranchée 1 peu profonde permet d'enterrer l'élément tubulaire 2, au-dessus des réseaux urbains de distribution déjà existants, avec plus de liberté d'action, de manière plus aisée, ainsi qu'avec plus de sécurité (moins de risques pour les intervenants qui n'ont pas à descendre dans la tranchée et pour le public pour qui une chute serait moins haute donc moins dangereuse). Cette faible profondeur facilite également des interventions ultérieures éventuelles.

Les moyens mécaniques pour réaliser une tranchée 1 de faible profondeur sont moins importants, de plus faibles dimensions (ce qui facilite l'accessibilité de ces moyens, sur les chantiers), génèrent moins de nuisances sonores, etc.

La tranchée 1 est réalisée, en une seule opération, par une trancheuse mécanique à roues ou à chaîne et, au fur et à mesure des besoins du chantier. Simultanément ou avec un léger différé, le fond et les abords de la tranchée sont libérés des déblais et nettoyés par aspiration mécanique. Cette opération permet en particulier d'obtenir un milieu le moins agressif possible pour l'élément tubulaire 2. Un exemple de trancheuse est décrit dans le document EP-A-532 870.

Les déblais récupérés, d'un volume réduit, peuvent être traités en centrale spécialisée et réutilisés pour des opérations ultérieures.

L'élément tubulaire 2 est directement posé sur le fond 4 de la tranchée 1, sans lit de sablon, ni autre protection. Ainsi, juste après la pose, l'élément tubulaire 2 est au moins localement en contact direct avec le matériau en place sur le terrain 3 au niveau du fond 4. La pose de l'élément tubulaire 2 peut-être effectuée en continu par exemple à l'aide d'un touret solidaire ou non de la trancheuse.

Eventuellement, un élément métallique 8 est déposé également dans la tranchée 1, pour permettre un repérage ultérieur aisé de l'élément tubulaire 2.

Comme illustré par la figure 2, le procédé selon l'invention comporte une opération consistant à faire couler une préparation de mortier 6 dans la tranchée 1. La préparation de mortier 6 à l'état liquide est déversée directement sur l'élément tubulaire 2 et sur le fond 4 de la tranchée 1.

La préparation de mortier 6 est auto-compactante. Elle s'écoule par gravité autour de l'élément tubulaire 2. Lorsque son niveau dans la tranchée 1 est suffisant, la préparation de mortier 6 enrobe complètement l'élément tubulaire 2.

La préparation de mortier 6 a une densité, une viscosité, un temps de prise et/ou un seuil de cisaillement adaptés pour que, à une température donnée, l'élément tubulaire 2 soit soulevé, par la force d'Archimède, du fond 4 de la tranchée 1. L'élément tubulaire 2 est alors isolé du fond 4 de la tranchée 1 par une épaisseur e de préparation de mortier 6. La préparation de mortier 6 forme une couche continue entre l'élément tubulaire 2 et le matériau en place sur le terrain 3, au fond 4 et sur les parois 5 de la tranchée 1.

Eventuellement mais sans que cela soit nécessaire si les paramètres tels que la densité, la viscosité, le temps de prise et/ou le seuil de cisaillement ont été convenablement choisis, l'élément tubulaire 2 est maintenu à une profondeur prédéterminée, par exemple entre 1 et 10cm, constante par des moyens de bridage tels que des arceaux anti-remonté 7. Ces arceaux 7 sont disposés sur l'élément tubulaire 2 en laissant un jeu vertical e de manière à laisser l'élément tubulaire 2 remonter sous l'effet de la force d'Archimède exercée par la préparation de mortier 6 à l'état liquide.

Dans la préparation de mortier 6 à l'état liquide, le rapport eau/ciment est par exemple de 0,8 à 2.

Selon une composition particulière de la préparation de mortier 6, donnée à titre d'exemple, celle-ci est une boue chargée à la chaux.

Cette préparation de mortier 6 est non essorable.

Afin de ne pas endommager l'élément tubulaire 2, la préparation de mortier 6 est chimiquement inerte pour le polyéthylène haute densité et a une granulométrie inférieure ou sensiblement égale à 6,3 mm. Les constituants de la composition de mortier 6 ne comportent pas d'arrêtes saillantes susceptible d'endommager l'élément tubulaire 2.

Plus précisément, la préparation de mortier 6 ne diffuse pas dans le polyéthylène haute densité, par contact direct ou par ruissellement des eaux de pluie entraînant des produits chimiques (solvants, lubrifiants, etc.). La préparation de mortier 6 n'a pas d'effet notable sur la durée de vie de l'élément tubulaire 2.

De même, la préparation de mortier 6 n'a pas d'effets nocifs sur l'environnement.

La préparation de mortier 6 a une vitesse de prise relativement élevée. Ainsi, l'utilisation de la chaussée, du trottoir ou de l'accotement, est possible dans un délai de 4 à 6 heures après que la préparation de mortier 6 ait été coulée dans la tranchée 1. Puis, après un séchage suffisant de la préparation de mortier 6 (généralement inférieur à 12h), la couche de roulement 10 peut être restaurée pour une mise à niveau complète.

Après solidification, la préparation de mortier 6 a une perméabilité et/ou une porosité permettant la détection d'une éventuelle fuite du fluide circulant dans l'élément tubulaire 2, c'est-à-dire du gaz dans le cas présent. La préparation de mortier ne se rétracte pas lors du séchage. Ainsi il n'y a pas d'espace annulaire entre l'élément tubulaire 2 et la préparation de mortier 6 solidifiée. La détection de la fuite se fait alors à la verticale de celle-ci, le gaz ne cheminant pas, avant de déboucher à la surface, le long de l'élément tubulaire 2.

La préparation de mortier possède un taux d'air occlus compris entre 15 et 22% et plus particulièrement entre 18 et 20%. Ceci permet d'obtenir une perméabilité au fluide et une ré-excavabilité appropriées.

La perméabilité de la préparation de mortier 6, en PIR/PSR (PIR est l'acronyme de l'expression « partie inférieure du remblai » et PSR est l'acronyme de l'expression « partie supérieure du remblais ») est comprise entre 10⁻¹² et 10⁻⁸ m².

La préparation de mortier 6, une fois solidifiée, permet une ré-excavation de l'élément tubulaire 2, avec des pioches ne provoquant pas d'étincelles et éventuellement avec d'autres moyens spécifiques.

En effet, une fois solidifiée, la préparation de mortier 6 a une résistance en compression, sur éprouvette cylindrique de 11x22 cm², à vingt-huit jours comprise entre 2 et 8 Mpa et en particulier comprise entre 3 et 5 Mpa. A quatre vingt dix jours, la résistance en compression est supérieure à 2 Mpa, mais peut avoir une résistance plus faible en traction.

La préparation de mortier 6 a un affaissement au mini-cône compris entre 8 et 15 cm et un étalement de 15 cm minimum. Ces propriétés peuvent être nécessaires à l'obtention de la rhéologie appropriée à la mise en place de la préparation de mortier 6 et de l'élément tubulaire 2.

La préparation de mortier 6 est colorée en jaune et permet une protection visuelle de l'élément tubulaire 2. Cette disposition permet de s'affranchir de la pose d'un grillage avertisseur tels que ceux généralement utilisés pour ce type d'application et dont l'efficacité est limitée.

En outre, la préparation de mortier 6 assure une protection mécanique de l'élément tubulaire 2, en particulier au trafic routier, contre des sollicitations en compression de quelques MPa, par exemple 2 MPa.

L'effort maximal de compression transmis par la préparation de mortier 6 à l'élément tubulaire 2, lors du séchage de la préparation de mortier 6, lorsqu'elle est soumise à un trafic routier (sollicitation dynamique, fatigue) ou à une sollicitation statique (patin de position d'un engin de travaux publics, ...) est inférieur à la limite d'endommagement de l'élément tubulaire. La profondeur de pose P est adaptée à l'intensité du trafic routier.

Afin d'obtenir un niveau de sécurité approprié pour la protection de l'élément tubulaire 2, en particulier lors d'un impact mécanique, des fibres naturelles et/ou synthétiques peuvent être incorporées à la préparation de mortier 6. La proportion de ces fibres peut être de 0,4 à 1% en poids de la préparation de mortier 6.

La préparation de mortier 6 a une température de mise en oeuvre supérieure à 5°C. Une fois solidifiée, elle est insensible au gel.

Le procédé selon l'invention est mis en oeuvre tronçon par tronçon, au fur et à mesure de l'avancement des opérations de tranchage, aspiration des déblais, pose de l'élément tubulaire, pose des prises de branchements, remblayage, etc. Ces diverses opérations sont effectuées par un train de machines indépendantes ou non. L'utilisation de machines indépendantes permet cependant une plus grande de modularité du procédé.

Des coffrages peuvent être réalisés de place en place afin d'effectuer ultérieurement des branchements. Ces branchements peuvent être effectués, depuis le haut de la fouille.

## Revendications

1. Procédé de pose d'éléments tubulaires enterrés, tels que des conduites pour transporter un fluide, ce procédé comportant les opérations consistant à :
- creuser une tranchée (1) allongée ayant une largeur (1) et une profondeur (P) supérieures aux dimensions transversales correspondantes d'un élément tubulaire (2), cette tranchée (1) ayant un fond (4) constitué du matériau en place sur le terrain (3) avant la réalisation de la tranchée (1),
- déposer au moins une partie de l'élément tubulaire (2) dans la tranchée (1), et
- faire couler une préparation de mortier (6) dans la tranchée (1),
ainsi que
- l'opération consistant à déposer au moins une partie de l'élément tubulaire (2) dans la tranchée (1), est effectuée de manière à ce que cette partie (2) soit au moins localement en contact direct avec le matériau en place sur le terrain (3) au fond (4) de la tranchée (1), que
- l'opération consistant à faire couler une préparation de mortier (6) dans la tranchée (1), est effectuée directement sur ladite partie de l'élément tubulaire (2) déposée au fond (4) de la tranchée (1), pour la recouvrir et l'enrober complètement, et que
- la préparation de mortier (6) a, avant solidification, une densité et une viscosité adaptées, pour que ladite partie de l'élément tubulaire (2) soit soulevée, par la force d'Archimède, du fond (4) de la tranchée (1) et pour que la préparation de mortier forme, une fois solidifiée, une couche continue entre le matériau en place sur le terrain au fond (4) de la tranchée (1) et l'élément tubulaire (2),
caratérisé en ce que la préparation de mortier a une granulométrie inférieure ou sensiblement égale à 6,3 mm, et en ce que ladite préparation de mortier ne se rétracte pas lors du séchage et a après solidification une perméabilité adaptée pour permettre qu'une éventuelle fuite d'un gaz circulant dans l'élément tubulaire (2) débouche à la surface du mortier et puisse être détectée à la verticale de ladite fuite.

2. Procédé selon la revendication 1, dans lequel l'élément tubulaire (2) est pourvu, avant de le déposer dans la tranchée (1), d'une couche de protection.

3. Procédé selon l'une des revendications précédentes, dans lequel un élément métallique (8) est adjoint à l'élément tubulaire avant l'opération consistant à faire couler la préparation de mortier (6) dans la tranchée (1), afin de permettre un repérage aisé de l'élément tubulaire (2), à partir de la surface du terrain (3) dans laquelle il est enterré.

4. Procédé selon l'une des revendications précédentes, dans lequel la tranchée (1) est creusée sur une profondeur inférieure ou sensiblement égale à 60 cm.

5. Préparation de mortier, notamment pour la mise en oeuvre du procédé selon l'une des revendications précédentes, cette préparation de mortier (6) étant destinée, après solidification, à remblayer au moins partiellement une tranchée (1) dans laquelle est déposée au moins une partie d'un élément tubulaire (2) à enterrer, tel qu'une conduite pour transporter un fluide, cette préparation ayant avant solidification, une densité, une viscosité et un temps de prise adaptés, pour que ladite partie de l'élément tubulaire (2) déposée dans le fond (4) de la tranchée (1) soit soulevée, par la force d'Archimède, du fond (4) de la tranchée (1) et pour que la préparation de mortier forme une couche continue entre le matériau en place sur le terrain (3) au fond (4) de la tranchée (1) et l'élément tubulaire (2), **caractérisée en ce que** ladite préparation de mortier ne se rétracte pas lors du séchage et a après solidification une perméabilité adaptée pour permettre qu'une éventuelle fuite d'un gaz circulant dans l'élément tubulaire (2) débouche à la surface du mortier et puisse être détectée à la verticale de ladite fuite, la préparation de mortier possédant un taux d'air occlus compris entre 15% et 22%.

6. Préparation de mortier selon la revendication 5, colorée pour avoir une couleur codifiée, permettant lors d'une ré-excavation de l'élément tubulaire (2) enterré, de connaître la nature du fluide transporté par l'élément tubulaire (2).

7. Préparation de mortier selon la revendication 6, dont la couleur est jaune.

8. Préparation de mortier selon l'une des revendications 5 à 7, chimiquement inerte pour le polyéthylène haute densité.

9. Préparation de mortier selon l'une des revendications 5 à 8, ayant un module de portance à la plaque sensiblement égal ou supérieur à 50MPa.

10. Préparation de mortier selon l'une des revendications 5 à 9 ayant une fois solidifiée, une résistance en compression à quatre-vingt-dix jours, supérieure ou égale à 2 Mpa.

11. Préparation de mortier selon l'une des revendications 5 à 10, comprenant au moins l'un des matériaux compris dans la liste comportant la chaux, l'argile et un grave.

## Claims

1. Method for installing buried tubular elements, such as ducts for transporting a fluid, this method comprising the operations consisting in:
- digging an elongated trench (1) having a length (1) and a depth (D) greater than the corresponding transversal dimensions of a tubular element (2), this trench (1) having a bottom (4) comprised of material in place on the land (3) before the trench (1) is created,
- deposit at least one portion of the tubular element (2) in the trench (1), and
- pour a preparation of mortar (6) in the trench (1),
as well as
- the operation consisting in depositing at least one portion of the tubular element (2) in the trench (1), is carried out in such a way that this portion (2) is at least locally in direct contact with the material in place on the land (3) at the bottom (4) of the trench (1), that
- the operation consisting in pouring a preparation of mortar (6) in the trench (1), is carried out directly on said portion of the tubular element (2) placed at the bottom (4) of the trench (1), in order to cover it and coat it entirely, and that
- the preparation of mortar (6) has, before solidification, a density and a viscosity that are adapted, so that said portion of the tubular element (2) is raised, by buoyancy, from the bottom (4) of the trench (1) and so that the preparation of mortar forms, once solidified, a continuous layer between the material in place on the land at the bottom (4) of the trench (1) and the tubular element (2),
**characterised in that** the preparation of mortar has a granulometry less than or substantially equal to 6.3mm, and **in that** said preparation of mortar does not retract during drying and has after solidification a permeability adapted in order to allow for a possible leakage of gas circulating in the tubular element (2) to exit at the surface of the mortar and be detected at the vertical of said leak.

2. Method according to claim 1, wherein the tubular element (2) is provided, before depositing in the trench (1), with a protective layer.

3. Method according to one of the preceding claims, wherein a metal element (8) is added to the tubular element before the operation consisting in pouring the preparation of mortar (6) in the trench (1), in order to allow for easy location of the tubular element (2), from the surface of the land (3) wherein it is buried.

4. Method according to one of the preceding claims, wherein the trench (1) is dug over a depth less than or substantially equal to 60 cm.

5. Preparation of mortar, in particular for the implementation of the method according to one of the preceding claims, this preparation of mortar (6) being intended, after solidification, to fill in at least partially a trench (1) wherein is deposited at least one portion of a tubular element (2) to be buried, such as a duct for transporting a fluid, this preparation having before solidification, a density, a viscosity and a setting time that are adapted, so that said portion of the tubular element (2) deposited in the bottom (4) of the trench (1) is raised, by buoyancy, from the bottom (4) of the trench (1) and so that the preparation of mortar forms a continuous layer between the material in place on the land (3) at the bottom (4) of the trench (1) and the tubular element (2), **characterised in that** said preparation of mortar does not retract during drying and has after solidification a permeability that is adapted to allow for a possible leakage of a gas circulating in the tubular element (2) to exit at the surface of the mortar and be able to be detected at the vertical of said leakage, with the preparation of mortar having a rate of entrapped air between 15% and 22%.

6. Preparation of mortar according to claim 5, coloured in order to have a coded colour, making possible during a re-excavation of the buried tubular element (2), to know the nature of the fluid transported by the tubular element (2).

7. Preparation of mortar according to claim 6, of which the colour is yellow.

8. Preparation of mortar according to one of claims 5 to 7, chemically inert for high-density polyethylene.

9. Preparation of mortar according to one of claims 5 to 8, having a bearing capacity module at the plate substantially greater than or equal to 50MPa.

10. Preparation of mortar according to one of claims 5 to 9 having, once solidified, a resistance to compression at ninety days, greater than or equal to 2 Mpa.

11. Preparation of mortar according to one of claims 5 to 10, including at least one of the materials contained in the list comprising lime, clay and gravel.

## Patentansprüche

1. Verfahren zum Legen von rohrförmigen Elementen in der Erde, wie etwa Leitungen zum Transport eines Fluids, wobei das Verfahren folgende Schritte umfasst:
- Ausheben eines länglichen Grabens (I), welcher eine Breite (1) und eine Tiefe (P) aufweist, die größer sind als die entsprechenden transversalen Ausmaße eines rohrförmigen Elements (2), wobei der Graben (1) einen Boden (4) aufweist, der aus dem vor der Realisierung des Grabens (1) auf dem Gebiet (3) vorhandenen Material gebildet ist,
- Ablegen von wenigstens einem Abschnitt des rohrförmigen Elements (2) in dem Graben (1), und
- Abgabe einer Mörtelzubereitung (6) in den Graben (1), wobei
- der Schritt eines Ablegens von wenigstens einem Abschnitt des rohrförmigen Elements (2) in dem Graben (1) derart durchgeführt wird, dass dieser Abschnitt (2) wenigstens lokal in direktem Kontakt mit dem auf dem Gebiet (3) am Boden (4) des Grabens (1) vorhandenen Material ist,
- der Schritt einer Abgabe einer Mörtelzubereitung (6) in den Graben (1) direkt an dem auf dem Boden (4) des Grabens (1) abgelegten Abschnitt des rohrförmigen Elements (2) durchgeführt wird, um ihn zu bedecken und vollständig zu umhüllen, und
- die Mörtelzubereitung (6) vor Verfestigung eine Dichte und eine Viskosität aufweist, welche so angepasst sind, dass der Abschnitt des rohrförmigen Elements (2) durch Auftriebskraft von dem Boden (4) des Grabens (1) hochgehoben wird und dass die Mörtelzubereitung, sobald sie verfestigt ist, eine kontinuierliche Schicht zwischen dem auf dem Gebiet auf dem Boden (4) des Grabens (1) vorhandenen Material und dem rohrförmigen Element (2) bildet, **dadurch gekennzeichnet, dass**
die Mörtelzubereitung Kornabmaße kleiner als oder im Wesentlichen gleich 6,3 mm aufweist, und die Mörtelzubereitung sich beim Trocknen nicht zurückzieht und nach Verfestigung eine Durchlässigkeit aufweist, die dazu angepasst ist, dass ein eventuelles Leck eines in dem rohrförmigen Element (2) umlaufenden Gases in die Oberfläche des Mörtels mündet und vertikal zu dem Leck detektierbar ist.

2. Verfahren nach Anspruch 1, wobei das rohrförmige Element (2), bevor es in dem Graben (1) abgelegt wird, mit einer Schutzschicht versehen wird.

3. Verfahren nach einem der vorhergehenden Ansprüche, wobei ein metallisches Element (8) dem rohrförmigen Element vor dem Schritt einer Abgabe der Mörtelzubereitung (6) in den Graben (1) benachbart ist, um eine leichte Kennzeichnung des rohrförmigen Elements (2) zu ermöglichen ausgehend von der Fläche des Gebiets (3), in welcher es in die Erde gelegt ist.

4. Verfahren nach einem der vorhergehenden Ansprüche, wobei der Graben (1) mit einer Tiefe von kleiner als oder im Wesentlichen gleich 60 cm ausgehoben wird.

5. Mörtelzubereitung, insbesondere für die Durchführung des Verfahrens nach einem der vorhergehenden Ansprüche, wobei die Mörtelzubereitung (6) dazu bestimmt ist, nach Verfestigung wenigstens teilweise einen Graben (1) aufzufüllen, in welchem wenigstens ein Abschnitt eines in die Erde zu legenden rohrförmigen Elements (2) abgelegt ist, wie etwa eine Leitung zum Transport eines Fluids, wobei diese Zubereitung vor Verfestigung eine Dichte, eine Viskosität und eine Abbindezeit aufweist, welche so angepasst sind, dass der in dem Boden (4) des Grabens (1) abgelegte Abschnitt des rohrförmigen Elements (2) durch Auftriebskraft von dem Boden (4) des Grabens (1) hochgehoben wird und dass die Mörtelzubereitung eine kontinuierliche Schicht zwischen dem auf dem Gebiet (3) auf dem Boden (4) des Grabens (1) vorhandenen Material und dem rohrförmigen Element (2) bildet, **dadurch gekennzeichnet, dass** die Mörtelzubereitung sich beim Trocknen nicht zurückzieht und nach Verfestigung eine Durchlässigkeit aufweist, die so angepasst ist, dass es ermöglicht ist, dass ein eventuelles Leck eines in dem rohrförmigen Element (2) umlaufenden Gases in die Oberfläche des Mörtels mündet und vertikal zu dem Leck detektierbar ist, wobei die Mörtelzubereitung einen Anteil eingeschlossener Luft von zwischen 15% und 22% aufweist.

6. Mörtelzubereitung nach Anspruch 5, welche so gefärbt ist, dass sie eine kodifizierte Farbe aufweist, wodurch es bei einer Wiederausgrabung des in die Erde gelegten rohrförmigen Elements (2) ermöglicht ist, die Art des von dem rohrförmigen Element (2) transportierten Fluids zu erkennen.

7. Mörtelzubereitung nach Anspruch 6, deren Farbe gelb ist.

8. Mörtelzubereitung nach einem der Ansprüche 5 bis 7, welche chemisch inert für hochdichtes Polyethylen ist.

9. Mörtelzubereitung nach einem der Ansprüche 5 bis 8, welche ein Tragfähigkeitsmodul (module de portance ä la plaque) von im Wesentlichen genauso groß wie oder größer als 50 MPa aufweist.

10. Mörtelzubereitung nach einem der Ansprüche 5 bis 9, welche, sobald sie verfestigt ist, einen 90-Tage-Kompressionswiderstand von wenigstens 2 MPa aufweist.

11. Mörtelzubereitung nach einem der Ansprüche 5 bis 10, umfassend wenigstens eines der folgenden Materialien: Kalk, Ton, einen Kies.
